# EUROPÄISCHE PATENTANMELDUNG

(11) **EP 1 310 200 A1**
(43) Veröffentlichungstag der Anmeldung: **14.05.2003**
(21) Anmeldenummer: 02025268.0
(22) Anmeldetag: 12.11.2002
(51) Int. Cl.: A47J 36/02, A47J 27/00

(54) **Emailliertes Kochgefäss**

(30) Priorität: 13.11.2001 DE 20118358 U
(71) Anmelder: Silit-Werke GmbH & Co. KG, D-88499 Riedlingen (DE)
(72) Erfinder: Nutz, Michael, 88527 Goeffingen (DE); Paukner, Josef, 88499 Riedlingen (DE); Fingerle, Hans, 88499 Riedlingen (DE)
(74) Vertreter: Tönhardt, Marion, Dr.

(57) **Zusammenfassung**

Ein Kochgefäß aus metallischem Rohkörper (1) mit einer äußeren und einer inneren Oberfläche, der einen Bodenbereich und eine Seitenwand aufweist, bei dem die Seitenwand auf der äußeren und inneren Oberfläche und der Bodenbereich auf der inneren Oberfläche emailliert ist, ist dadurch gekennzeichnet, daß der Bodenbereich eine Metallschicht aus gut wärmeleitfähigem Metall (3) auf der äußeren Oberfläche des Bodenbereiches und einer aufgelegten Stahlschicht (4) aufweist, ohne daß die Metallschicht aus gut wärmeleitfähigem Metall (3) und die Stahlschicht (4) auf ihren äußeren Oberflächen emailliert sind.

## Beschreibung

Die vorliegende Erfindung betrifft ein emailbeschichtetes Gefäß, insbesondere ein mit Email beschichtetes Metallgefäß, das zur Verwendung als Kochtopf oder Pfanne geeignet ist.

Eine Emailbeschichtung für Metallgefäße bietet den Vorteil, daß die Oberfläche des strukturgebenden Metallgefäßes nicht mit etwaigen Inhaltsstoffen in Verbindung kommt und daher von äußeren Einwirkungen geschützt ist. So läßt sich durch die Emailbeschichtung eine chemisch beständige Oberfläche herstellen, die die Eigenschaften des verwendeten Grundkörpers aus Metall übertrifft, wobei die Stabilität des fertigen Gefäßes jedoch vom metallischen Grundkörper stammt.

Der Stand der Technik zu Kochgefäßen bietet mehrere Aufbaumöglichkeiten an, metallische Gefäße mit einer Emailbeschichtung zu versehen. Dabei wird zum einen eine günstige Temperaturverteilung im Gefäßboden dadurch erreicht, daß eine Metallschicht aus gut wärmeleitfähigem Material, beispielsweise Kupfer, Aluminium oder Legierungen mit Kupfer- oder Aluminiumanteil verwendet wird. Zum anderen muß jedoch das Problem gelöst werden, daß der Boden nicht nur gegen Verwerfungen beim Erwärmen formstabil bleibt, sondern auch, daß eine Emailbeschichtung möglich bleibt, obwohl diese nicht auf einer Kupferschicht haften bleibt.

Der Stand der Technik schlägt daher Maßnahmen vor, um die Kupferschicht oder eine Aluminiumschicht so zu verändern, daß dieser Bereich dennoch emaillierfähig wird. So offenbart die DE 35 22 492 A1 ein Kochgefäß aus Metall, auf dessen äußerer Bodenplatte eine Kupferplatte als Wärmeleitschicht angeordnet ist, die wiederum von einem Stahlblech umgriffen wird. Um eine emaillierfähige Oberfläche um das gesamte Kochgefäß zu erzielen, ist das die Kupferplatte umgreifende Stahlblech so geformt, daß es diese vollständig abdeckt und an den Boden des Metallgefäßes angrenzt. Insbesondere ist vorgesehen, das umgreifende, die Kupferplatte abdeckende Stahlblech durch eine Schweißnaht an den Behälterkörper anzubinden.

Die EP 785 042 B1 offenbart ein Kochgefäß aus Stahl, unter dessen Boden ein Stahlblech mittels dazwischen liegender Kupferplatine auflegiert wird, so daß bei einer Temperatur von 1100°C eine Legierung in dem Zwischenraum zwischen dem Gefäßboden und dem außen liegenden Stahlblech entsteht. Die Emaillierfähigkeit der kupferhaltigen Legierungsschicht zwischen dem Boden des Stahltopfes und dem darunter angeordneten Stahlblech wird auf die gegenüber der dazwischen angeordneten Kupferplatine veränderten Eigenschaften der erzeugten Legierung zurückgeführt.

An dem bekannten Stand der Technik ist nachteilig, daß das Stahlblech, das als Stahlschicht die äußere Oberfläche des späteren Kochgefäßes darstellt, sowie die zwischen dem Gefäßboden und dem Stahlblech liegende Aluminium- oder Kupferschicht durch ein aufwendiges Verbindungsverfahren angebunden werden muß, um eine durchgängige Emailbeschichtung der Außenseite des Gefäßes zu ermöglichen.

So bringt das Verfahren gemäß der DE 35 22 492 A1 einen zusätzlichen Verarbeitungsschritt, nämlich das Verschweißen des umgreifenden voll abdeckenden Stahlbleches mit sich, das Verfahren gemäß der EP 785 042 B1 eine hohe Temperaturbelastung der metallischen Bestandteile sowie einen hohen apparativen Aufwand und einen hohen Energieeintrag während der Herstellung mit sich.

Überdies kann die Herstellung einer kupferhaltigen Legierung gemäß der EP 785 042 B1 nur eine verhältnismäßig dünne, gut wärmeleitende Schicht aus der verwendeten Kupferplatine erzeugen, um einerseits eine homogene Legierungsschicht zu erzeugen, als auch andererseits ein Wegfließen der aufgeschmolzenen Kupferplatine zu vermeiden.

Der vorliegenden Erfindung stellt sich gegenüber dem bekannten Stand der Technik die Aufgabe, ein Gefäß, wie ein emailliertes Kochgeschirr bereitzustellen, dessen metallischer Rohkörper zumindest auf den mit einem eingefüllten Inhalt in Kontakt kommenden Oberflächen mit Email beschichtet ist, überdies einen Boden aufweist, der eine gute Wärmeleiteigenschaft und eine gute Wärmeverteilung aufweist. Ein weiteres Ziel der vorliegenden Erfindung ist es, ein Gefäß bereitzustellen, das neben den zuvor genannten Eigenschaften auch so aufgebaut ist, daß es auf günstige Weise hergestellt werden kann, sowie Verfahren zur Herstellung solcher Gefäße.

Die erfindungsgemäße Lösung ist ein Gefäß, das als Kochgeschirr verwendet werden kann und einen metallischen Rohkörper aufweist, der auf seiner Innenseite vollständig und auf der Außenseite mit Ausnahme des Bodenbereiches emailliert ist und der Bodenbereich auf seiner äußeren Oberfläche übereinander zunächst eine Kupferschicht und darauf eine Stahlschicht, beispielsweise aus einer Stahlplatte, aufweist.

Der metallische Rohkörper des Gefäßes kann beispielsweise in Form eines Kochgefäßes in einem herkömmlichen Tiefziehverfahren aus Stahl hergestellt werden. In einem weiteren Arbeitsschritt wird auf den äußeren Bodenbereich eine metallische Wärmeleitschicht, beispielsweise eine Kupferschicht und anschließend eine Stahlplatte aufgebracht, um einen Boden zu bilden, der sowohl gute Wärmeleiteigenschaften umfaßt, als auch eine hohe mechanische Stabilität. Die Verbindung der Wärmeleitschicht zwischen dem äußeren Boden des Gefäßes und der aufgelegten Stahlplatte läßt sich dadurch herstellen, daß eine entsprechende Kupferplatte, beispielsweise von 0,5 mm bis 2 mm dick, durch Löten, insbesondere Hartlöten, auf ihrer einen Seite mit dem äußeren Bodenbereich des Gefäßes und mit der anderen Seite mit der aufgelegten Stahlplatte verbunden wird. Es bietet sich insbesondere an, das Löten beider Verbindungsflächen, d.h. einerseits zwischen äußerer Bodenoberfläche des Gefäßes und Kupferplatte, andererseits zwischen Kupferplatte und aufgelegter Stahlplatte, in einem Lötofen durchzuführen. Das Löten kann dabei sowohl mit flußmittelhaltigen Lötpasten als auch unter kontrollierter Atmosphäre unter nicht-oxidierenden Bedingungen flußmittelfrei im Durchlaufofen durchgeführt werden. Besonders vorteilhaft ist es dabei, beide Lötungen in einem Ofendurchgang gleichzeitig durchzuführen.

Die Beschichtung mit Email über die gesamte Innenfläche des Gefäßes und die umfängliche äußere Oberfläche des Gefäßes, bis an die aufgebrachte Kupferschicht heran, jedoch nicht über diese hinweg, kann durch den herkömmlichen Auftrag eines einschichtigen Emails oder durch einen Grund- und anschließenden Deckauftrag sowie zusätzlichen Dekorauftrag von Email erzeugt werden.

In einer weiteren erfindungsgemäßen Ausführungsform wird die Emailbeschichtung ebenfalls auf die äußere umfängliche Oberfläche des Gefäßes aufgebracht, ohne die nach außen tretende Wärmeleitschicht zu überdecken, zusätzlich wird jedoch die äußere Oberfläche der aufgelegten Stahlplatte mit Email beschichtet, so daß der äußere Gefäßboden emailliert ist. Auch diese Ausführungsform bietet einen gut wärmeleitfähigen Boden mit einer wärmeleitenden Schicht, die nach außen hin von einer aufgelegten Stahlplatte abgedeckt ist, die dem gesamten Bodenaufbau mechanische Stabilität verleiht.

Für ein besonders günstiges Herstellungsverfahren können sowohl das Löten des wärmeleitenden Bodens aus Kupferplatte und Stahlplatte als auch das Brennen einer oder mehrerer Emailschichten in einem Durchgang durch einen Ofen herbeigeführt werden.

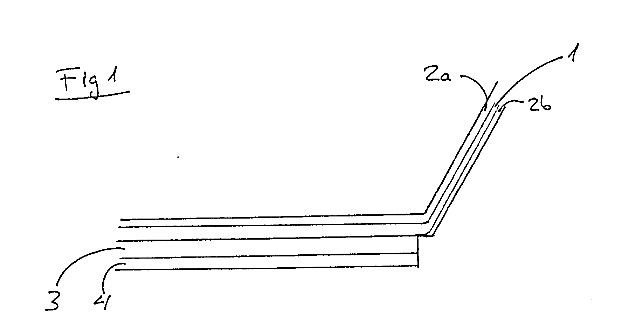

Figur 1 ist eine Schnittansicht eines erfindungsgemäßen Gefäßes, in der ein metallischer Rohkörper 1 auf seiner Innenseite mit einer Emailbeschichtung 2a und auf seiner Außenseite mit einer Emailbeschichtung 2b versehen ist. Der metallische Rohkörper besteht vorzugsweise aus Edelstahl. Die Emailbeschichtung 2b überdeckt den metallischen Rohkörper 1 in dem Bereich, in dem er nicht von der Metallschicht aus gut wärmeleitfähigem Metall 3 abgedeckt ist. Die Stahlplatte 4 besteht vorzugsweise aus rostfreiem Stahl und ist über eine flächige Lötung mit der einen Seite der Metallschicht aus gut wärmeleitfähigem Metall 3 verbunden. Die Metallschicht aus gut wärmeleitfähigem Metall 3 ist auf ihrer der Stahlplatte 4 gegenüberliegenden Seite wiederum über eine flächige Lötung mit dem äußeren Bodenbereich des Gefäßes 1 verbunden.

Die Vorteile des erfindungsgemäßen Aufbaus eines Kochgefäßes mit wärmeleitender Bodenplatte, die eine wärmeleitende Metallschicht beispielsweise aus Kupfer aufweist, die wiederum von einer Stahlplatte abgedeckt ist, die mit einer Wärmequelle in Kontakt kommt und für mechanische Stabilität sowie Formstabilität beim Erwärmen sorgt, in Kombination mit einer Emailbeschichtung liegen darin, die günstigen Eigenschaften des wärmeleitenden und stabilen Bodens einerseits mit den für das Kochen vorteilhaften Eigenschaften der Emailbeschichtung andererseits in einem einfachen Aufbau und daher produktionstechnisch und wirtschaftlichen günstigen Herstellungsverfahren zusammenzuführen. So bietet der Aufbau der Bodens die Vorteile der guten Wärmeleitfähigkeit, ohne daß die Nachteile der mangelnden Haftung von Email auf Kupfer den Aufbau des Gefäßes stören würden. So können erfindungsgemäß Kupferschichten jeglicher Dicke zwischen äußerem Gefäßboden und Stahlplatte eingebaut werden, ohne Schwierigkeiten bei der mechanischen Verbindung, beispielsweise dem Auflöten oder dem Anbingen einer Stahlplatte hervorzurufen.

Das erfindungsgemäße Gefäß vermeidet es, technisch aufwendige Lösungen zu erfordern, um eine durchgängige Emailbeschichtung des Gefäßes auch über den äußeren Boden hinweg zu ermöglichen. Es ist im Gegenteil möglich, ein Gefäß mit Emailbeschichtung auf den für die Verwendung entscheidenden Oberflächen, nämlich der Innenfläche für den Kontakt mit Kochgut und auf der Außenfläche des Gefäßes oberhalb der Bodenfläche zur leichteren Reinigung, für den Schutz des metallischen Rohkörpers und ein ansprechende Äußeres bereitzustellen.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Kochgefäß aus metallischem Rohkörper mit einer äußeren und einer inneren Oberfläche, der einen Bodenbereich und eine Seitenwand aufweist, bei dem die Seitenwand auf der äußeren und inneren Oberfläche und der Bodenbereich auf der inneren Oberfläche emailliert ist, **dadurch gekennzeichnet, daß** der Bodenbereich eine Metallschicht aus gut wärmeleitfähigem Metall auf der äußeren Oberfläche des Bodenbereiches und einer aufgelegten Stahlschicht aufweist, ohne daß die Metallschicht aus gut wärmeleitfähigem Metall und die Stahlschicht auf ihren äußeren Oberflächen emailliert sind.

2. Kochgefäß nach Anspruch 1, **dadurch gekennzeichnet, daß** die Stahlschicht auf der äußeren Oberfläche emailliert ist, die nicht unmittelbar an die Wärmeleitschicht angrenzt.

3. Kochgefäß nach Anspruch 1, **dadurch gekennzeichnet, daß** die Metallschicht aus gut wärmeleitfähigem Metall eine Kupferplatte ist.

4. Kochgefäß nach Anspruch 1 oder 2, **dadurch gekennzeichnet, daß** die Metallschicht aus gut wärmeleitfähigem Metall aus Aluminium, einer Aluminium- oder einer Kupferlegierung besteht.

5. Kochgefäß nach einem der voranstehenden Ansprüche, **dadurch gekennzeichnet, daß** die Metallschicht aus gut wärmeleitfähigem Metall zwischen dem äußeren Bodenbereich des Kochgefäßes und der Stahlplatte durch Lötungen festgelegt ist.

6. Kochgefäß nach einem der voranstehenden Ansprüche, **dadurch gekennzeichnet, daß** die Kupferplatte durch Hartlötungen festgelegt ist.

7. Kochgefäß nach einem der voranstehenden Ansprüche, **dadurch gekennzeichnet, daß** der metallische Rohkörper aus Edelstahl besteht.
